# EUROPEAN PATENT SPECIFICATION

(11) **EP 4 113 901 B1**
(45) Date of publication and mention of the grant of the patent: **06.09.2023**
(21) Application number: 22194270.9
(22) Date of filing: 07.09.2022
(51) Int. Cl.: H04L 9/40, H04L 67/025, H04L 67/125, H04W 4/44

(54) **METHOD AND APPARATUS FOR AUTHORIZING SERVICE FUNCTION, DEVICE AND STORAGE MEDIUM**
VERFAHREN UND VORRICHTUNG ZUR AUTORISIERUNG EINER DIENSTFUNKTION, VORRICHTUNG UND SPEICHERMEDIUM
PROCÉDÉ ET APPAREIL D'AUTORISATION DE FONCTION DE SERVICE, DISPOSITIF ET SUPPORT D'INFORMATIONS

(30) Priority: 10.09.2021 CN 202111064508
(43) Date of publication of application: 04.01.2023
(73) Proprietor: Apollo Intelligent Connectivity (Beijing) Technology Co., Ltd., Beijing 100176 (CN)
(72) Inventor: ZHANG, Jianjun, Beijing, 100176 (CN); CHEN, Zhen, Beijing, 100176 (CN)
(74) Representative: J A Kemp LLP

(56) References cited:
- EP-A1- 3 849 222
- CN-A- 111 245 922
- CN-A- 112 637 264

## Description

### TECHNICAL FIELD

The present disclosure relates to the Internet of Vehicles and intelligent cockpit technology in the field of artificial intelligence, and in particular, to a method and apparatus for authorizing a service function, a device, a system and a storage medium.

### BACKGROUND

At present, a vehicle needs to implement a function of vehicle-home interconnection, so as to implement control of various devices in the vehicle and control of various devices in the home through the vehicle. Therefore, it is necessary to authorize service functions of companies corresponding to respective devices to the vehicle.

In the prior art, multiple requests may be initiated to a server through a mobile terminal (e.g., a mobile phone), and an authorization process of a service function may be completed through multiple interactions.

However, in the prior art, since the authorization of the service function can be completed only after multiple interactions between the mobile terminal and the server, the authorization process is cumbersome, time-consuming and inefficient.

CN 111245922 A discloses a vehicle-mounted terminal, vehicle-mounted service platform, and information processing method, which makes the vehicle-mounted terminal control the controlled equipment more intelligent and safe.

EP 3849222 A1 discloses an information interaction method to realize cross-platform information interaction.

CN 112637264 A discloses an information interaction method to realize cross-platform information interaction.

### SUMMARY

The invention is set out in the appended set of claims. The present disclosure provides a method and apparatus for authorizing a service function, a device, a system and a storage medium.

According to a first aspect of the present disclosure, a method for authorizing a service function is provided, where the method includes:
receiving an authorization request sent by a vehicle, where the authorization request includes vehicle account information and platform account information;
determining a function to be authorized corresponding to the vehicle account information;
associating the vehicle account information, the platform account information, and the function to be authorized corresponding to the vehicle account information; and
sending response information to the vehicle, where the response information is used to indicate that the vehicle account information, the platform account information, and the function to be authorized corresponding to the vehicle account information have been associated.

According to a second aspect of the present disclosure, a method for authorizing a service function is provided, where the method includes:
in response to a login request, generating an authorization request, where the login request is used to indicate vehicle account information and platform account information; where the authorization request comprises the vehicle account information and the platform account information;
sending the authorization request to a server; where the authorization request is used to determine a function to be authorized corresponding to the vehicle account information, and the authorization request is used to associate the vehicle account information, the platform account information, and the function to be authorized corresponding to the vehicle account information; and
receiving response information fed back by the server, where the response information is used to indicate that the vehicle account information, the platform account information, and the function to be authorized corresponding to the vehicle account information have been associated.

According to a third aspect of the present disclosure, an apparatus for authorizing a service function is provided, where the apparatus includes:
a first receiving unit, configured to receive an authorization request sent by a vehicle, where the authorization request includes vehicle account information and platform account information;
a determining unit, configured to determine a function to be authorized corresponding to the vehicle account information;
an associating unit, configured to associate the vehicle account information, the platform account information, and the function to be authorized corresponding to the vehicle account information; and
a first sending unit, configured to send response information to the vehicle, where the response information is used to indicate that the vehicle account information, the platform account information, and the function to be authorized corresponding to the vehicle account information have been associated.

According to a fourth aspect of the present disclosure, a system for authorizing a service function is provided, where the system includes:
a server including the apparatus according to any one of the third aspect; and
a vehicle having a control device including:
   a generating unit, configured to, in response to a login request, generate the authorization request; where the authorization request includes the vehicle account information and the platform account information;
   a first sending unit, configured to send the authorization request to the server; and
   a first receiving unit, configured to receive the response information fed back by the server.

According to a fifth aspect of the present disclosure, a server is provided, including: at least one processor; and a memory communicatively connected to the at least one processor; where the memory stores instructions executable by the at least one processor, and the instructions are executed by the at least one processor to enable the at least one processor to execute the method according to any one of the first aspect.

According to a sixth aspect of the present disclosure, a control device for a vehicle is provided, including: at least one processor; and a memory communicatively connected to the at least one processor; where the memory stores instructions executable by the at least one processor, and the instructions are executed by the at least one processor to enable the at least one processor to execute the method according to any one of the second aspect.

According to a seventh aspect of the present disclosure, a non-transitory computer-readable storage medium having computer instructions stored thereon is provided, where the computer instructions are used to cause the computer to execute the method according to any one of the first aspect, or, the computer instructions are used to cause the computer to execute the method according to any one of the second aspects.

According to an eighth aspect of the present disclosure, a computer program product is provided, where the computer program product includes: a computer program, which is stored in a readable storage medium, at least one processor of a server can read the computer program from the readable storage medium, and the at least one processor executes the computer program to cause the server to execute the method according to the first aspect.

According to a ninth aspect of the present disclosure, a computer program product is provided, and the computer program product includes: a computer program, which is stored in a readable storage medium, at least one processor of a control device for a vehicle can read the computer program from the readable storage medium, and the at least one processor executes the computer program to cause the control device for a vehicle to execute the method according to the second aspect.

The technology according to the present disclosure solves the problem that the authorization process is cumbersome, time-consuming and inefficient, and can implement the association of the vehicle account information, the platform account information and the function to be authorized corresponding to the vehicle account information in the server, so as to achieve the objective of obtaining the function to be authorized corresponding to the vehicle account information without a need for the user to manually log in the server with the vehicle account information and platform account information.

It should be understood that the content described in this section is not intended to identify key or important features of the embodiments of the present disclosure, nor is it intended to limit the scope of the present disclosure. Other features of the present disclosure will be easily understood through the following description.

### BRIEF DESCRIPTION OF DRAWINGS

The drawings are used to better understand the solutions, and do not constitute a limitation on the present disclosure, where:
FIG. 1 is an illustrative schematic interaction diagram of implementing a vehicle-home interconnection function by a vehicle;
FIG. 2 is a schematic diagram according to a first embodiment of the present disclosure;
FIG. 3 is a schematic diagram according to a second embodiment of the present disclosure;
FIG. 4 is a schematic diagram according to a third embodiment of the present disclosure;
FIG. 5 is a schematic diagram according to a fourth embodiment of the present disclosure;
FIG. 6 is a schematic diagram according to a fifth embodiment of the present disclosure;
FIG. 7 is a schematic diagram according to a sixth embodiment of the present disclosure;
FIG. 8 is a schematic diagram according to a seventh embodiment of the present disclosure;
FIG. 9 is a schematic diagram according to an eighth embodiment of the present disclosure; and
FIG. 10 is a block diagram of a server or a control device for a vehicle for implementing a method for authorizing a service function of an embodiment of the present disclosure.

### DESCRIPTION OF EMBODIMENTS

Exemplary embodiments of the present disclosure are described below with reference to the accompanying drawings, where various details of the embodiments of the present disclosure are included to facilitate understanding, and should be considered as merely exemplary. Therefore, those of ordinary skill in the art should recognize that various changes and modifications can be made to the embodiments described herein without departing from the scope of the present disclosure. Similarly, for clarity and conciseness, descriptions of well-known functions and structures are omitted in the following description.

A vehicle needs to implement a function of vehicle-home interconnection, so as to achieve the objective of control of various devices in the vehicle and control of various devices in the home through the vehicle. Therefore, it is necessary to authorize service functions of companies corresponding to respective devices to the vehicle. When the vehicle uses the vehicle-home interconnection function, doors and windows of the vehicle or an air conditioner, a TV, a water heater and other devices in the home can be controlled through the vehicle. If the vehicle uses a voice function in the vehicle-home interconnection to control various devices in the vehicle and control various devices in the home, since the vehicle service company corresponding to the vehicle does not have the voice function in the vehicle-home interconnection function, the voice function needs to be authorized by the server to the vehicle. Thus, a series of settings on the server is required, resulting in a cumbersome process.

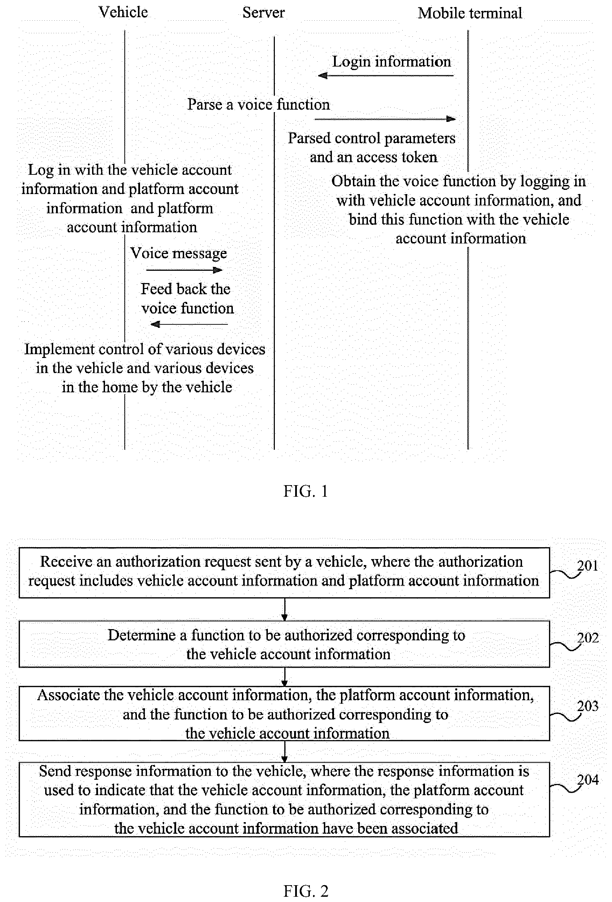

In an example, please refer to a schematic interaction diagram of a vehicle implementing a vehicle-home interconnection function shown in FIG. 1. A user logs in to a specified application program through a mobile terminal, logs in with platform account information through the application program interface, and searches for a function to be authorized in the application program, which for example may be a voice function. After searching for the voice function, the user logs in with the vehicle account information on the login interface presented by the application, where the vehicle account information is provided by a company corresponding to a vehicle server. After the mobile terminal logs in, the login information is fed back to the server, the voice function is parsed by the server, and a parsed control parameter and an access token are sent to the mobile terminal, and then the mobile terminal can obtain the voice function by logging in with the vehicle account information, and bind this function with the vehicle account information.

The user logs in with the vehicle account information and platform account information on the vehicle, then the vehicle can send a voice message to the server, and the vehicle can control various devices in the vehicle and control various devices in the home through the voice function fed back by the server.

However, in the above method, the user needs to manually log in with the vehicle account information and platform account information through the mobile terminal, and interacts with the server multiple times to achieve the purpose of controlling respective devices in the vehicle and respective devices in the home by the vehicle, and the implementation process is relatively cumbersome and the steps are relatively lengthy.

The present disclosure provides a method and apparatus for authorizing a service function, a device and a storage medium, which are applied to the Internet of Vehicles and intelligent cockpit technology in artificial intelligence, so as to solve the problem that the authorization process is cumbersome, time-consuming and inefficient.

FIG. 2 is a schematic diagram according to a first embodiment of the present disclosure. As shown in FIG. 2, FIG. 2 shows a method for authorizing a service function. The method is applied to a server, and the method includes:
S201: receive an authorization request sent by a vehicle, where the authorization request includes vehicle account information and platform account information.

Illustratively, an execution subject of the present embodiment is a server. The vehicle can communicate and interact with the server. The authorization request is a communication request sent by the vehicle to the server, and the communication request is used for authorizing a function by the server. The vehicle account information is information of the vehicle registered in the vehicle server. In an example, the information may include an account name of the vehicle and a password corresponding to the account name. The platform account information is information used to log in the server. In an example, the information also includes an account name and a password corresponding to the account name for logging in to the server.

In the embodiment, the vehicle sends the authorization request to the server, and the server can generate corresponding indication information according to the authorization request, so that the vehicle can acquire the function to be authorized requested by the vehicle.

S202: determine a function to be authorized corresponding to the vehicle account information.

Illustratively, functions to be authorized corresponding to different vehicle account information may be the same or different in the server. For example, vehicle account information A corresponds to a function A to be authorized in the server, vehicle account information B corresponds to a function B to be authorized in the server, and vehicle account information C may also correspond to the function A to be authorized in the server.

S203: associate the vehicle account information, the platform account information, and the function to be authorized corresponding to the vehicle account information.

In this embodiment, after obtaining the function to be authorized corresponding to the vehicle account information in the server, the vehicle account information is associated with the function to be authorized corresponding to the vehicle account information in the server, which is equivalent to associate the three since the function to be authorized has been associated with the platform account information.

S204: send response information to the vehicle, where the response information is used to indicate that the vehicle account information, the platform account information, and the function to be authorized corresponding to the vehicle account information have been associated.

Illustratively, the response information is a message generated by the server for the authorization request sent by the vehicle, and can indicate a state that the vehicle account information, the platform account information, and the function to be authorized corresponding to the vehicle account information have been associated in the server. Therefore, the user can log in with the vehicle account information and the platform account information on the vehicle, and then use the function to be authorized corresponding to the vehicle account information.

In the embodiment, the authorization request sent by the vehicle is received, where the authorization request includes vehicle account information and platform account information, the function to be authorized corresponding to the vehicle account information is determined, and the vehicle account information, the platform account information, and the function to be authorized corresponding to the vehicle account information are associated together. Through the above technical solution, the user does not need to manually log in the server with the vehicle account information and the platform account information, thereby solving the cumbersome login process and improving the convenience of the login process.

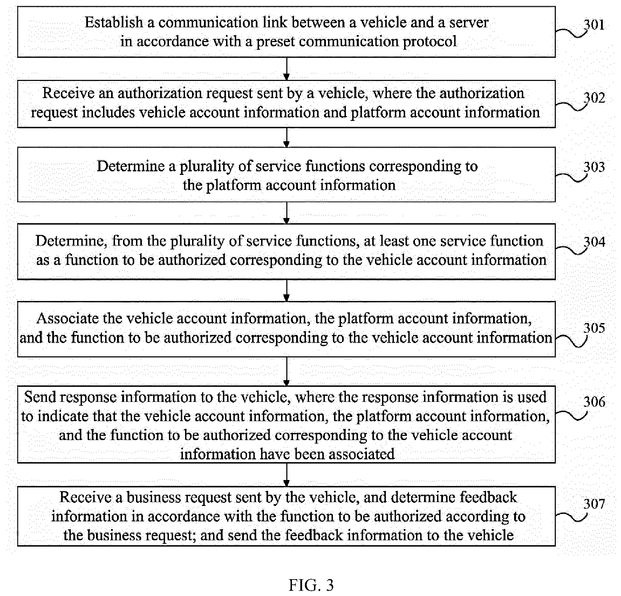

FIG. 3 is a schematic diagram according to a second embodiment of the present disclosure. As shown in FIG. 3, specifically, FIG. 3 shows a method for authorizing a service function, where the method is applied to a server, and the method includes:
S301: establish a communication link between a vehicle and a server in accordance with a preset communication protocol.

Illustratively, an execution subject of the present embodiment is a server. Before the server performs an authorization process with the vehicle, the server needs to establish communication with the vehicle. The server establishes a communication link with the vehicle using a preset communication protocol.

The preset communication protocol may be Transport Control Protocol/Internet Protocol (TCP/IP). TCP/IP has developed rapidly with advantages of low implementation cost, safe and reliable communication among multiple platforms, and routable ability, and has become a standard protocol in the Internet. The preset communication protocol in the embodiment may also be the Internet Packet Switching/Sequential Packet Switching protocol. An advantage of this setting is that it can enable smooth communication between the vehicle and the server, and thus enable the vehicle to use the function authorized by the server.

S302: receive an authorization request sent by a vehicle, where the authorization request includes vehicle account information and platform account information.

Illustratively, reference can be made to the foregoing step S201 for this step, which will not be repeated here.

S303: determine a plurality of service functions corresponding to the platform account information.

Illustratively, a plurality of service functions may be provided in the server, where the plurality of service functions may include a voice recognition function, a semantic analysis function, a language recognition function, and a language processing function. The platform account information may correspond to two of the above service functions, or may also correspond to three of the above service functions. Specifically, after receiving the authorization request sent by the vehicle, the server determines the plurality of service functions corresponding to the platform account information among the plurality of service functions provided in the server, and associates the corresponding plurality of service functions with the platform account information.

In an example, step S303 includes: retrieving a preset corresponding relationship between platform account information and service functions; and determining the plurality of service functions corresponding to the platform account information in the authorization request in accordance with the corresponding relationship.

Illustratively, the preset corresponding relationship between the platform account information and the service functions in the server is pre-stored in the server, where the corresponding relationship may be in a form of a mapping table. For example, if the platform account information is A, the service functions may include A, B, C, and D, the mapping table shows that the platform account information A corresponds to the service function A and the service function B, and then the service function A and the service function B corresponding to the platform account information A in the authorization request are determined according to the current mapping table. An advantage of this setting is that functions corresponding to the platform account information in the server can be quickly determined, thereby improving the efficiency of function searching.

In an example, the determining the plurality of service functions corresponding to the platform account information in the authorization request in accordance with the corresponding relationship in the step S303 specifically includes:
passing the platform account information in the authorization request in accordance with a preset callback interface, to determine the plurality of service functions corresponding to the platform account information in the authorization request in accordance with the corresponding relationship.

Illustratively, callback is a two-way calling mode, and when the called interface is called, the interface on the other side will also be called. Illustratively, A calls B through the callback interface, and B calls A through the callback interface after the execution is completed. The preset callback interface can pass the platform account information in the authorization request, and trigger a process mechanism of a service function in the server through the callback interface. An advantage of this setting is that the process mechanism of the service function in the server can be triggered, so that the server can execute the corresponding function, and the authorization of the function can be quickly implemented.

S304: determine, from the plurality of service functions, at least one service function as a function to be authorized corresponding to the vehicle account information.

Illustratively, a service function is selected from the plurality of service functions determined in the step S303 as the function to be authorized corresponding to the vehicle account information. For example, if the service functions corresponding to the platform account information A are the service function A and the service function B, where the service function B is the function to be authorized corresponding to the vehicle account information, then the service function B is determined as the function to be authorized corresponding to the vehicle account information.

In an example, the step S304 includes: retrieving a pre-stored business function corresponding to the vehicle account information; and determining the business function as the function to be authorized corresponding to the vehicle account information if it is determined, according to the pre-stored business function corresponding to the vehicle account information, that the business function exists in the plurality of service functions.

Illustratively, the business function is also a service function within the server. For example, if the service functions corresponding to the platform account information A are the service function A and the service function B, where the service function B is the business function corresponding to the vehicle account information, then the service function B is taken as the function to be authorized corresponding to the vehicle account information. The name or type of the business function corresponding to the vehicle account information is stored in the server. Specifically, the plurality of service functions can be searched according to the name and type of the business function, and a search result may be regarded as the function to be authorized corresponding to the vehicle account information. The reason for this setting is that there are a large number of service functions provided in the server, and determining the function to be authorized corresponding to the vehicle account from the service functions in the platform account information can save the time to search for the function to be authorized, thereby improving the efficiency.

In an example, the retrieving the pre-stored business function corresponding to the vehicle account information in step S304 includes: passing the vehicle account information in the authorization request in accordance with the preset callback interface, and retrieving the pre-stored business function corresponding to the vehicle account information in accordance with the passed vehicle account information.

Illustratively, the preset callback interface can pass the vehicle account information in the authorization request, and trigger a process mechanism of a service function in the server through the callback interface. An advantage of this setting is that the process mechanism of a service function in the server can be triggered, so that the server executes a corresponding function, and the authorization of the function can be quickly achieved.

S305: associate the vehicle account information, the platform account information, and the function to be authorized corresponding to the vehicle account information.

Illustratively, reference can be made to step 202 for this step, which will not be repeated here.

S306: send response information to the vehicle, where the response information is used to indicate that the vehicle account information, the platform account information, and the function to be authorized corresponding to the vehicle account information have been associated.

Illustratively, reference can be made to the foregoing step S203 for this step, which will not be repeated here.

S307: receive a business request sent by the vehicle, and determine feedback information in accordance with the function to be authorized according to the business request; and send the feedback information to the vehicle.

In an example, the business request is a voice interaction request, or the business request is a semantic analysis request.

Illustratively, after the step S306, the server associates and binds the vehicle account information, the platform account information, and the function to be authorized corresponding to the vehicle account information, so that the vehicle can use the function to be authorized corresponding to the vehicle account information. When the vehicle needs to use the function to be authorized corresponding to the vehicle account information, the vehicle sends a business request to the server, and then the server generates and sends the feedback information in accordance with the function to be authorized corresponding to the vehicle account information. The vehicle can use the feedback information to implement the requested authorized function. An advantage of setting like this is that the business function currently required by the vehicle can be determined, and the vehicle can respond to the business function quickly.

If the business request is a voice interaction request, the vehicle sends a voice interaction request to the server, and the server generates a feedback voice according to content in the voice interaction request, and sends the feedback voice to the vehicle.

If the service request is a semantic analysis request, the vehicle sends a semantic analysis request to the server, and the server performs semantic analysis according to content in the semantic analysis request, and obtains a corresponding control instruction, which is sent to the vehicle as the feedback information. An advantage of this setting is that different business requests can be supported, thereby achieving feedback on various service requests and improving user experience.

In this embodiment, an authorization request sent by a vehicle is received, where the authorization request includes vehicle account information and platform account information; a plurality of service functions corresponding to the platform account information are determined; at least one service function is determined as a function to be authorized corresponding to the vehicle account information from the plurality of service functions, and the vehicle account information, the platform account information, and the function to be authorized corresponding to the vehicle account information are associated together; and the response information is sent to the vehicle. In this embodiment, since the platform account information is associated with the function to be authorized provided in the server, then associating the vehicle account information with the function to be authorized corresponding to the vehicle account information in the server is equivalent to associating the vehicle account information, the platform account information and the function to be authorized corresponding to the vehicle account information together in the server. Through the above technical solution, the function to be authorized can be determined in the service functions corresponding to the platform account information, so that the server can accurately associate the function to be authorized with the vehicle account information, and the accuracy of the authorized function obtained by the vehicle can be improved.

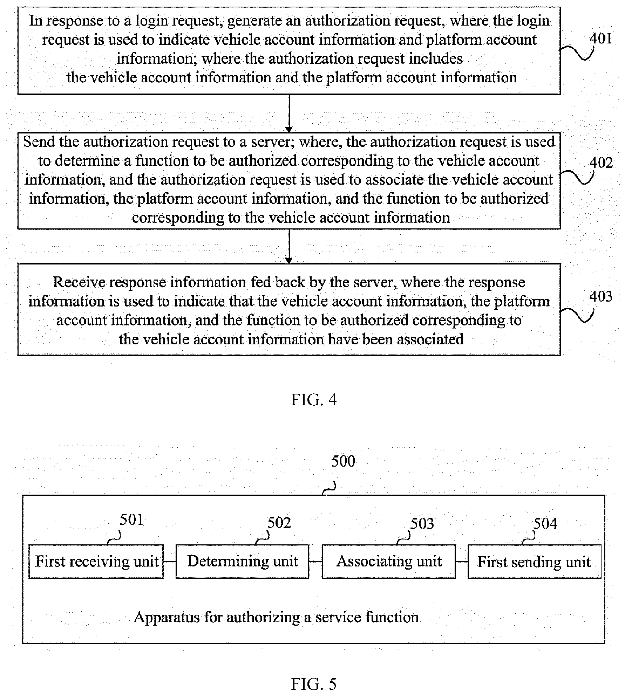

FIG. 4 is a schematic diagram according to a third embodiment of the present disclosure. As shown in FIG. 4, FIG. 4 shows a method for authorizing a service function, the method is applied to a control device for a vehicle, and the method includes:
S401: in response to a login request, generate an authorization request, where the login request is used to indicate vehicle account information and platform account information; where the authorization request comprises the vehicle account information and the platform account information.

Illustratively, the login request is initiated by a user on the control device for the vehicle, and the login request includes the login vehicle account information and the login platform account information. Specifically, a corresponding authorization request is generated according to the vehicle account information and the platform account information in the login request.

S402: send the authorization request to a server; where the authorization request is used to determine a function to be authorized corresponding to the vehicle account information, and the authorization request is used to associate the vehicle account information, the platform account information, and the function to be authorized corresponding to the vehicle account information.

In an example, the function to be authorized corresponding to the vehicle account information is determined in accordance with a plurality of service functions, where the plurality of service functions are service functions corresponding to the platform account information.

Illustratively, the platform account information corresponds to a plurality of service functions in the server, where the function to be authorized corresponding to the vehicle account information is determined from the above-mentioned plurality of service functions. Illustratively, for a service function A and a service function B corresponding to platform account information A in the server, it is necessary to determine whether the function to be authorized corresponding to the vehicle account information A exists in the service functions corresponding to the platform account information A. If so, this service function is determined as the function to be authorized.

In an example, the plurality of service functions are determined in accordance with a preset corresponding relationship between platform account information and service functions.

In an example, the function to be authorized corresponding to the vehicle account information is a business function corresponding to the vehicle account information, and the function to be authorized corresponding to the vehicle account information is determined according to a pre-stored business function corresponding to the vehicle account information when it is determined that the business function exists in the plurality of service functions.

Illustratively, reference can be made to the foregoing embodiments for this step, which will not be repeated here.

S403: receive response information fed back by the server, where the response information is used to indicate that the vehicle account information, the platform account information, and the function to be authorized corresponding to the vehicle account information have been associated.

In an example, the method provided in this embodiment may further include the following steps:
sending a business request to the server; where the business request is used to determine feedback information in accordance with the function to be authorized; and receiving the feedback information sent by the server.

In an example, the service request is a voice interaction request, or the business request is a semantic analysis request.

In an example, the method provided in this embodiment may further include the following steps: if a number of times of the login request is greater than a preset number of times and login duration is greater than preset duration, the response to the login request is stopped.

Illustratively, the preset number of times may be set by the user, and the preset duration may also be set by the user. For example, the preset number of times may be 4 times, and the preset duration may be 20 minutes. If the number of times of the login requests is greater than the preset number and the login duration is greater than 20 minutes, it is indicated that the login is abnormal, and the response to the login request is stopped. An advantage of this setting is that the safety of operation of the control device for the vehicle can be protected and the user experience can be improved.

For the solution of this embodiment, reference can be made to the technical solution in the above method, and the specific implementation process and technical principle are the same, which will not be repeated here.

FIG. 5 is a schematic diagram according to a fourth embodiment of the present disclosure. As shown in FIG. 5, FIG. 5 shows an apparatus for authorizing a service function. The apparatus is applied to a server, and the apparatus 500 includes:
a first receiving unit 501, configured to receive an authorization request sent by a vehicle, where the authorization request includes vehicle account information and platform account information;
a determining unit 502, configured to determine a function to be authorized corresponding to the vehicle account information;
an associating unit 503, configured to associate the vehicle account information, the platform account information, and the function to be authorized corresponding to the vehicle account information; and
a first sending unit 504, configured to send response information to the vehicle, where the response information is used to indicate that the vehicle account information, the platform account information, and the function to be authorized corresponding to the vehicle account information have been associated.

Those skilled in the art can clearly understand that, for the convenience and brevity of description, reference can be made to the corresponding processes in the foregoing method embodiments for the specific operation process of the apparatus described above, which will not be repeated here.

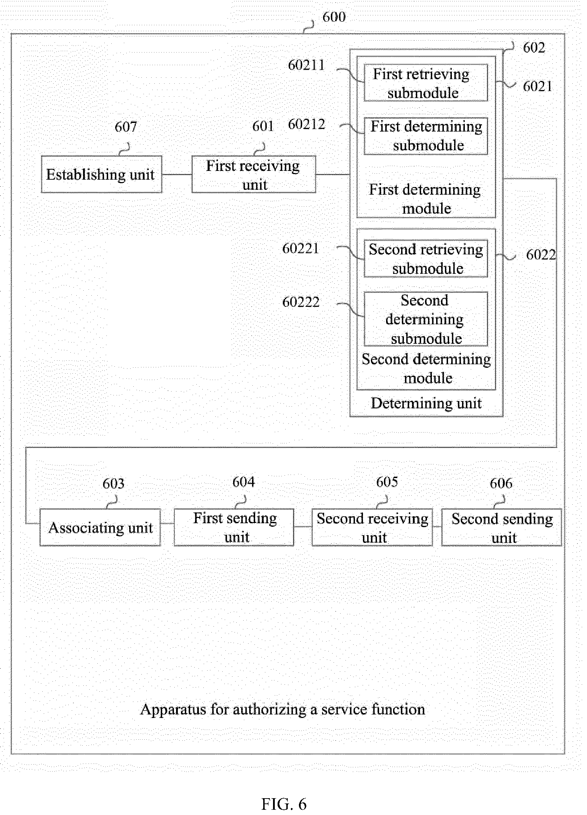

FIG. 6 is a schematic diagram according to a fifth embodiment of the present disclosure. As shown in FIG. 6, FIG. 6 shows an apparatus for authorizing a service function. The apparatus is applied to a server, and the apparatus 600 includes:
a first receiving unit 601, configured to receive an authorization request sent by a vehicle, where the authorization request includes vehicle account information and platform account information;
a determining unit 602, configured to determine a function to be authorized corresponding to the vehicle account information;
an associating unit 603, configured to associate the vehicle account information, the platform account information, and the function to be authorized corresponding to the vehicle account information; and
a first sending unit 604, configured to send response information to the vehicle, where the response information is used to indicate that the vehicle account information, the platform account information, and the function to be authorized corresponding to the vehicle account information have been associated.

In an example, the determining unit 602 includes:
a first determining module 6021, configured to determine a plurality of service functions corresponding to the platform account information; and
a second determining module 6022, configured to determine, from the plurality of service functions, at least one service function as the function to be authorized corresponding to the vehicle account information.

In an example, the first determining module 6021 includes:
a first retrieving submodule 60211, configured to retrieve a corresponding relationship between preset platform account information and service functions; and
a first determining submodule 60212, configured to determine a plurality of service functions corresponding to the platform account information in the authorization request in accordance with the corresponding relationship.

In an example, the first determining submodule 60212 is specifically configured to: pass the platform account information in the authorization request in accordance with a preset callback interface, to determine the plurality of service functions corresponding to the platform account information in the authorization request in accordance with the corresponding relationship.

In an example, the second determining module 6022 includes:
a second retrieving submodule 60221, configured to retrieve a pre-stored business function corresponding to the vehicle account information; and
a second determining submodule 60222, configured to determine the business function as the function to be authorized corresponding to the vehicle account information if it is determined, according to the pre-stored business function corresponding to the vehicle account information, that the business function exists in the plurality of service functions.

In an example, the second retrieving submodule 60221 is specifically configured to: pass the vehicle account information in the authorization request in accordance with a preset callback interface, and retrieve the pre-stored business function corresponding to the vehicle account information in accordance with the passed vehicle account information.

In an example, the apparatus provided in this embodiment further includes:
a second receiving unit 605, configured to receive a business request sent by the vehicle, and determine feedback information according to the function to be authorized in accordance with the business request; and
a second sending unit 606, configured to send the feedback information to the vehicle.

In an example, the business request is a voice interaction request, or the business request is a semantic analysis request.

In an example, the apparatus provided in this embodiment further includes:
an establishing unit 607, configured to establish a communication link between the vehicle and the server according to a preset communication protocol.

Those skilled in the art can clearly understand that, for the convenience and brevity of description, reference can be made to the corresponding process in the foregoing method embodiments for the specific operation process of the apparatus described above, which will not be repeated here.

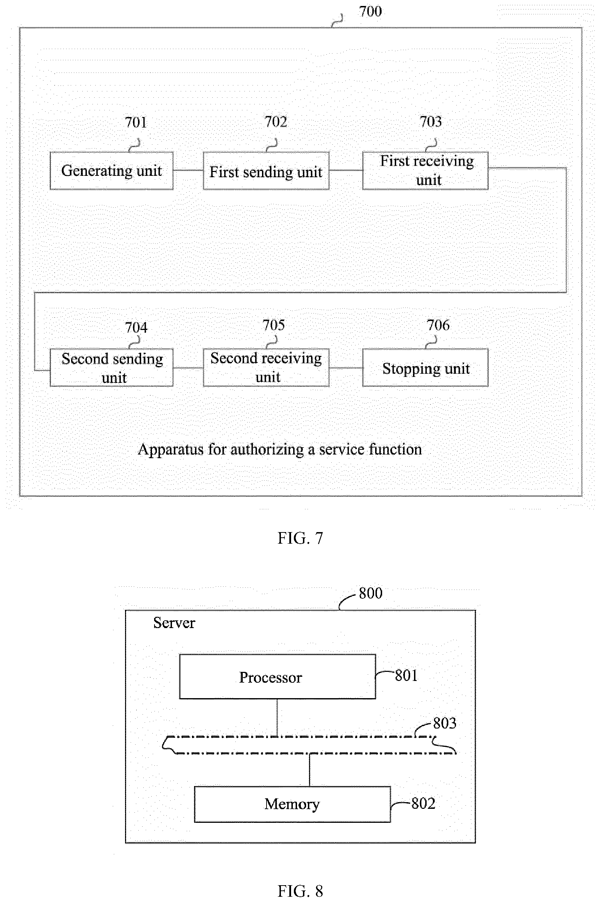

FIG. 7 is a schematic diagram according to a sixth embodiment of the present disclosure. As shown in FIG. 7, FIG. 7 shows an apparatus for authorizing a service function. The apparatus is applied to a control device for a vehicle, and the apparatus 700 includes:
a generating unit 701, configured to, in response to a login request, generate an authorization request, where the login request is used to indicate vehicle account information and platform account information, and where the authorization request comprises the vehicle account information and the platform account information;
a first sending unit 702, configured to send the authorization request to a server; where the authorization request is used to determine a function to be authorized corresponding to the vehicle account information, and the authorization request is used to associate the vehicle account information, the platform account information, and the function to be authorized corresponding to the vehicle account information; and
a first receiving unit 703, configured to receive response information fed back by the server, where the response information is used to indicate that the vehicle account information, the platform account information, and the function to be authorized corresponding to the vehicle account information have been associated.

In an example, the function to be authorized corresponding to the vehicle account information is determined in accordance with a plurality of service functions, where the plurality of service functions are service functions corresponding to the platform account information.

In an example, the plurality of service functions are determined in accordance with a preset corresponding relationship between platform account information and service functions.

In an example, the function to be authorized corresponding to the vehicle account information is a business function corresponding to the vehicle account information, and the function to be authorized corresponding to the vehicle account information is determined according to a pre-stored business function corresponding to the vehicle account information when it is determined that the business function exists in the plurality of service functions.

In an example, the apparatus further includes:
a second sending unit 704, configured to send a business request to the server; where the business request is used to determine feedback information in accordance with the function to be authorized; and
a second receiving unit 705, configured to receive the feedback information sent by the server.

In an example, the business request is a voice interaction request, or the business request is a semantic analysis request.

In an example, the apparatus further includes:
a stopping unit 706, configured to, if a number of times of the login request is greater than a preset number of times and login duration is greater than preset duration, stop the response to the login request.

Those skilled in the art can clearly understand that, for the convenience and brevity of description, reference can be made to the corresponding process in the foregoing method embodiments for the specific operation process of the apparatus described above, which will not be repeated here.

FIG. 8 is a schematic diagram according to a seventh embodiment of the present disclosure. As shown in FIG. 8, FIG. 8 shows that a server 800 in the present disclosure may include: a processor 801 and a memory 802.

The memory 802 is configured to store a program. The memory 802 may include a volatile memory, for example, a random-access memory (RAM), such as a static random-access memory (SRAM), a double data rate synchronous dynamic random access memory (DDR SDRAM). The memory may also include a non-volatile memory, such as a flash memory. The memory 802 is configured to store a computer program (such as an application programs, functional modules for implementing the above-mentioned methods), a computer instruction, etc., and the above-mentioned computer program, computer instruction, etc. may be stored in one or more memories 802 in partitions. And the above-mentioned computer program, computer instruction, data, etc. can be invoked by the processor 801.

The above-mentioned computer program, computer instruction, etc. may be stored in one or more memories 802 in partitions. And the above-mentioned computer program, computer instruction, etc. can be invoked by the processor 801.

The processor 801 is configured to execute the computer program stored in the memory 802 to implement various steps in the methods involved in the foregoing embodiments.

For details, the relevant descriptions in the foregoing method embodiments can be referred to.

The processor 801 and the memory 802 may be independent structures, or integrated into an integrated structure. When the processor 801 and the memory 802 are independent structures, the memory 802 and the processor 801 can be coupled and connected through a bus 803.

The server in this embodiment may execute the technical solutions in the foregoing methods, and the specific implementation process and technical principle are the same, which will not be repeated here.

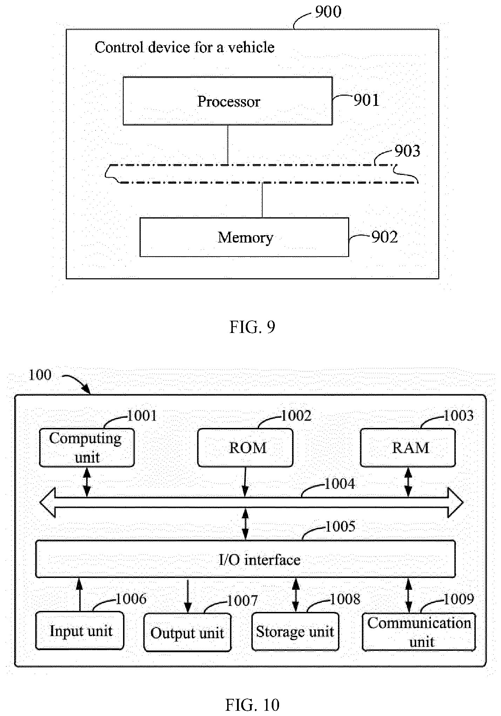

FIG. 9 is a schematic diagram according to an eighth embodiment of the present disclosure. As shown in FIG. 9, a control device 900 for a vehicle in the present disclosure may include: a processor 901 and a memory 902.

The memory 902 is configured to store a program. The memory 902 may include a volatile memory, for example, a random-access memory (RAM), such as static random-access memory (SRAM), a double data rate synchronous dynamic random access memory (DDR SDRAM), etc. The memory may also include a non-volatile memory, such as a flash memory. The memory 902 is configured to store a computer program (such as an application program, a functional module for implementing the above-mentioned methods), a computer instruction, etc., and the above-mentioned computer program, computer instruction, etc. may be stored in one or more memories 902 in partitions. And the above-mentioned computer program, computer instruction, data, etc. can be invoked by the processor 901.

The above-mentioned computer program, computer instruction, etc. may be stored in one or more memories 902 in partitions. And the above-mentioned computer program, computer instruction, etc. can be invoked by the processor 901.

The processor 901 is configured to execute the computer program stored in the memory 902 to implement various steps in the methods involved in the foregoing embodiments.

For details, the relevant descriptions in the foregoing method embodiments can be referred to.

The processor 901 and the memory 902 may be independent structures, or integrated into an integrated structure. When the processor 901 and the memory 902 are independent structures, the memory 902 and the processor 901 can be coupled and connected through a bus 903.

The control device for the vehicle in this embodiment may execute the technical solutions in the foregoing methods, and the specific implementation process and technical principle are the same, which will not repeated here.

According to an embodiment of the present disclosure, the present disclosure also provides a non-transitory computer-readable storage medium, having a computer instruction stored thereon, where the computer instruction is used to cause a computer to execute the solutions provided by the above-mentioned corresponding embodiments.

According to an embodiment of the present disclosure, the present disclosure also provides a computer program product, and the computer program product comprises: a computer program, which is stored in a readable storage medium, at least one processor of a server can read the computer program from the readable storage medium, and the at least one processor executes the computer program to cause the server to execute the solutions provided by the above-mentioned corresponding embodiments.

According to an embodiment of the present disclosure, the present disclosure also provides a computer program product, and the computer program product comprises: a computer program, which is stored in a readable storage medium, at least one processor of a control device for a vehicle can read the computer program from the readable storage medium, and the at least one processor executes the computer program to cause the control device for the vehicle to execute the method according to the above-mentioned corresponding embodiments.

FIG. 10 shows a schematic block diagram of an example electronic device 100 that can be used to implement the embodiments of the present disclosure. The electronic device is intended to represent various forms of digital computers, such as a laptop computer, a desktop computer, a work station, a personal digital assistant, a server, a blade server, a mainframe computer, and other suitable computers. The electronic device may also represent various forms of mobile devices, such as a personal digital assistant, a cellular phone, a smart phone, a wearable device, and other similar computing devices. The components shown herein, their connections and relationships, and their functions are merely examples, and are not intended to limit implementations of the present disclosure described and/or claimed herein. The electronic device provided in this embodiment is the server in the foregoing embodiments, or the electronic device provided in this embodiment is the control device for the vehicle in the foregoing embodiments.

As shown in FIG. 10, the device 100 includes a computing unit 1001, which may execute suitable actions and processing according to a computer program stored in a read-only memory (ROM) 1002 or a computer program loaded into a random access memory (RAM) 1003 from a storage unit 1008. In the RAM 1003, various programs and data required for the operation of the electronic device 1000 can also be stored. The calculating unit 1001, the ROM 1002, and the RAM 1003 are connected to each other through a bus 1004. An input/output (input/output, I/O) interface 1005 is also connected to the bus 1004.

Multiple components in the device 100 are connected to the I/O interface 1005, including: an input unit 1006, such as a keyboard, a mouse; an output unit 1007, such as various types of displays, speakers; and a storage unit 1008, such as a magnetic disk, an optical disk; and a communication unit 1009, such as a network card, a modem, a wireless communication transceiver. The communication unit 1009 allows the device 100 to exchange information/data with other devices through a computer network such as the Internet and/or various telecommunication networks.

The computing unit 1001 may be various general and/or special processing components with processing and computing capabilities. Some examples of the computing unit 1001 include, but are not limited to, a central processing unit (CPU), a graphics processing unit (GPU), various types of dedicated artificial intelligence (AI) computing chips, various types of computing units that run machine learning model algorithms, and a digital signal processor (DSP), and any appropriate processor, controller, microcontroller, etc. The calculating unit 1001 executes the various methods and processes described above, for example, the method for authorizing a service function. For example, in some embodiments, the method for authorizing a service function may be implemented as a computer software program, which is tangibly contained in a machine-readable medium, such as the storage unit 1008. In some embodiments, part or all of the computer program may be loaded and/or installed on the device 100 via the ROM 1002 and/or the communication unit 1009. When the computer program is loaded into the RAM 1003 and executed by the computing unit 1001, one or more steps of the method for authorizing a service function described above may be performed. Alternatively, in other embodiments, the computing unit 1001 may be configured to perform the method for authorizing a service function in any other suitable manner (for example, by means of firmware).

The various implementations of the systems and technologies described herein may be implemented in a digital electronic circuit system, an integrated circuit system, a field programmable gate array (FPGA), an application specific integrated circuit (ASIC), an application specific standard product (ASSP), a system-on-chip (SOC), a complex programmable logic device (CPLD), computer hardware, firmware, software, and/or the combinations thereof. These various implementations may include: being implemented in one or more computer programs that can be executed and/or interpreted on a programmable system including at least one programmable processor. The programmable processor may be a special or general programmable processor, and can receive data and instructions from a storage system, at least one input apparatus and at least one output apparatus, and transmit data and instructions to the storage system, the at least one input apparatus and the at least one output apparatus.

Program code used for implementing the method of the present disclosure may be written in any combination of one or more programming languages. The program code may be provided to a processor or controller of a general computer, special computer, or other programmable data processing devices, so that when the program code is executed by the processor or controller, the functions/operations specified in the flowcharts and/or block diagrams are implemented. The program code may be executed entirely on a machine, partly on a machine, partly executed on a machine and partly executed on a remote machine as independent software packages, or entirely executed on a remote machine or server.

In the context of the present disclosure, a machine-readable medium may be a tangible medium, which may include or store a program for use by the instruction execution system, apparatus, or device or in combination with the instruction execution system, apparatus, or device. The machine-readable medium may be a machine-readable signal medium or a machine-readable storage medium. The machine-readable medium may include, but is not limited to, an electronic, a magnetic, an optical, an electromagnetic, an infrared, or a semiconductor system, apparatus, or device, or any suitable combination thereof. More specific examples of the machine-readable storage medium may include electrical connections with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

To provide interaction with users, the systems and techniques described herein may be implemented on a computer which has: a display device (e.g., a CRT (cathode ray tube) or LCD (liquid crystal display) monitor) for displaying information to users; as well as a keyboard and a pointing apparatus (e.g., a mouse or a trackball) through which users can provide inputs to the computer. Other kinds of apparatuses may also be used to provide interaction with users, for example, a feedback provided to a user may be any form of sensory feedback (e.g., visual feedback, auditory feedback, or tactile feedback); and inputs may be received from a user in any form (including acoustic input, voice input or tactile input).

The systems and techniques described herein may be implemented in a computing system including a background component (e.g., as a data server), or a computing system including a middleware component (e.g., an application server), or a computing system including a front-end component (e.g., a user computer with a graphical user interface or a web browser through which users can interact with implementations of the systems and techniques described herein), or a computing system including any combination of such background component, middleware component or front-end component. Components of the system can be connected to each other through digital data communication in any form or medium (e.g., a communication network). Examples of the communication network include: a local area network (LAN), a wide area network (WAN), and the Internet.

A computer system may include a client and a server. The client and server are generally remote from each other and usually interact through a communication network. A relationship between the client and the server is generated by computer programs running on corresponding computers and having a client-server relationship with each other. The server may be a cloud server, also known as a cloud computing server or a cloud host. It is a host product in the cloud computing service system to solve the shortcomings of difficult management and weak business scalability in a traditional physical host and VPS service (Virtual Private Server, or VPS for short). The server may also be a server of a distributed system, or a server combined with a blockchain.

It should be understood that steps can be reordered, added or deleted using the various forms of processes shown above. For example, the steps described in the present disclosure may be executed in parallel, sequentially or in a different order, so long as the desired result of the technical solution disclosed in the present disclosure can be achieved, which is not limited herein.

The above specific embodiments do not constitute a limitation to the protection scope of the present disclosure. It should be understood by those skilled in the art that various modifications, combinations, sub-combinations, and substitutions may be performed according to design requirements and other factors. Any modification, equivalent substitution, improvement and others that are made within the principle of the present disclosure shall be included in the protection scope of the present disclosure.

## Claims

1. A method for authorizing a service function, comprising:
receiving (201) an authorization request sent by a vehicle, wherein the authorization request comprises vehicle account information and platform account information;
determining (202) a function to be authorized corresponding to the vehicle account information;
associating (203) the vehicle account information, the platform account information, and the function to be authorized corresponding to the vehicle account information; and
sending (204) response information to the vehicle, wherein the response information is used to indicate that the vehicle account information, the platform account information, and the function to be authorized corresponding to the vehicle account information have been associated;
wherein the determining (202) the function to be authorized corresponding to the vehicle account information comprises:
determining (303) a plurality of service functions corresponding to the platform account information; and
determining (304), from the plurality of service functions, at least one service function as a function to be authorized corresponding to the vehicle account information, comprising:
retrieving a pre-stored business function corresponding to the vehicle account information; and
if it is determined, according to the pre-stored business function corresponding to the vehicle account information, that the business function exists in the plurality of service functions, determining the business function as the function to be authorized corresponding to the vehicle account information.

2. The method according to claim 1, wherein the determining the plurality of service functions corresponding to the platform account information comprises:
retrieving a preset corresponding relationship between platform account information and service functions; and
determining the plurality of service functions corresponding to the platform account information in the authorization request in accordance with the corresponding relationship.

3. The method according to claim 2, wherein the determining the plurality of service functions corresponding to the platform account information in the authorization request in accordance with the corresponding relationship comprises:
passing the platform account information in the authorization request in accordance with a preset callback interface to determine the plurality of service functions corresponding to the platform account information in the authorization request in accordance with the corresponding relationship.

4. The method according to claim 1, wherein the retrieving the pre-stored business function corresponding to the vehicle account information comprises:
passing the vehicle account information in the authorization request in accordance with a preset callback interface, and retrieving the pre-stored business function corresponding to the vehicle account information in accordance with the passed vehicle account information.

5. The method according to any one of claims 1 to 4, further comprising:
receiving a business request sent by the vehicle, and determining feedback information in accordance with the function to be authorized according to the business request; and
sending the feedback information to the vehicle;
preferably, wherein the business request is a voice interaction request, or the business request is a semantic analysis request.

6. A method for authorizing a service function, comprising:
in response to a login request, generating (401) an authorization request, wherein the login request is used to indicate vehicle account information and platform account information; wherein the authorization request comprises the vehicle account information and the platform account information;
sending (402) the authorization request to a server; wherein the authorization request is used to determine a function to be authorized corresponding to the vehicle account information, and the authorization request is used to associate the vehicle account information, the platform account information, and the function to be authorized corresponding to the vehicle account information; and
receiving (403) response information fed back by the server, wherein the response information is used to indicate that the vehicle account information, the platform account information, and the function to be authorized corresponding to the vehicle account information have been associated;
wherein the function to be authorized corresponding to the vehicle account information is determined in accordance with a plurality of service functions, wherein the plurality of service functions are service functions corresponding to the platform account information; and
wherein the function to be authorized corresponding to the vehicle account information is a business function corresponding to the vehicle account information, and the function to be authorized corresponding to the vehicle account information is determined according to a pre-stored business function corresponding to the vehicle account information when it is determined that the business function exists in the plurality of service functions.

7. The method according to claim 6, wherein the plurality of service functions are determined in accordance with a preset corresponding relationship between platform account information and service functions.

8. The method according to claim 6 or 7, further comprising:
sending a business request to the server; wherein the business request is used to determine feedback information in accordance with the function to be authorized; and
receiving the feedback information sent by the server;
preferably, wherein the business request is a voice interaction request, or the business request is a semantic analysis request.

9. The method according to any one of claims 6 to 8, further comprising:
if a number of times of the login request is greater than a preset number of times and a login duration is greater than a preset duration, stopping response to the login request.

10. An apparatus for authorizing a service function, comprising:
a first receiving unit (501), configured to receive an authorization request sent by a vehicle, wherein the authorization request comprises vehicle account information and platform account information;
a determining unit (502), configured to determine a function to be authorized corresponding to the vehicle account information;
an associating unit (503), configured to associate the vehicle account information, the platform account information, and the function to be authorized corresponding to the vehicle account information; and
a first sending unit (504), configured to send response information to the vehicle, wherein the response information is used to indicate that the vehicle account information, the platform account information, and the function to be authorized corresponding to the vehicle account information have been associated;
wherein the determining unit (502) comprises:
a first determining module (6021), configured to determine a plurality of service functions corresponding to the platform account information;
a second determining module (6022), configured to determine, from the plurality of service functions, at least one service function as the function to be authorized corresponding to the vehicle account information; and
wherein the second determining module (6022) comprises:
a second retrieving submodule (60221), configured to retrieve a pre-stored business function corresponding to the vehicle account information; and
a second determining submodule (60222), configured to determine the business function as the function to be authorized corresponding to the vehicle account information if it is determined, according to the pre-stored business function corresponding to the vehicle account information, that the business function exists in the plurality of service functions.

11. A system for authorizing a service function, comprising:
a server including the apparatus according to claim 10; and
a vehicle having a control device comprising:
a generating unit (701), configured to, in response to a login request, generate the authorization request, wherein the login request is used to indicate vehicle account information and platform account information;
a first sending unit (702), configured to send the authorization request to the server;; and
a first receiving unit (703), configured to receive the response information fed back from the first sending unit (504) of the server.

12. A computer program product, comprising a computer program, wherein when the computer program is executed by a processor, the steps of the method according to any one of claims 1 to 5 are implemented, or when the computer program is executed by a processor, the steps of the method according to any one of claims 6 to 9 are implemented.

## Patentansprüche

1. Verfahren zum Autorisieren einer Dienstfunktion, umfassend:
Empfangen (201) einer von einem Fahrzeug gesendeten Autorisierungsanfrage, wobei die Autorisierungsanfrage Fahrzeugkontoinformationen und Plattformkontoinformationen umfasst;
Bestimmen (202) einer zu autorisierenden Funktion, die den Fahrzeugkontoinformationen entspricht;
Zuordnen (203) der Fahrzeugkontoinformationen, der Plattformkontoinformationen und der zu autorisierenden Funktion, die den Fahrzeugkontoinformationen entspricht; und
Senden (204) von Antwortinformationen an das Fahrzeug, wobei die Antwortinformationen verwendet werden, um anzuzeigen, dass die Fahrzeugkontoinformationen, die Plattformkontoinformationen und die zu autorisierende Funktion, die den Fahrzeugkontoinformationen entspricht, zugeordnet worden sind;
wobei das Bestimmen (202) der zu autorisierenden Funktion, die den Fahrzeugkontoinformationen entspricht, umfasst:
Bestimmen (303) einer Mehrzahl von Dienstfunktionen, die den Plattformkontoinformationen entsprechen; und
Bestimmen (304), aus der Mehrzahl von Dienstfunktionen, wenigstens einer Dienstfunktion als eine zu autorisierende Funktion, die den Fahrzeugkontoinformationen entspricht, umfassend:
Abrufen einer vorgespeicherten Geschäftsfunktion, die den Fahrzeugkontoinformationen entspricht; und
wenn gemäß der vorgespeicherten Geschäftsfunktion, die den Fahrzeugkontoinformationen entspricht, bestimmt wird, dass die Geschäftsfunktion in der Mehrzahl von Dienstfunktionen existiert, Bestimmen der Geschäftsfunktion als die zu autorisierende Funktion, die den Fahrzeugkontoinformationen entspricht.

2. Verfahren nach Anspruch 1, wobei das Bestimmen der Mehrzahl von Dienstfunktionen, die den Plattformkontoinformationen entsprechen, umfasst:
Abrufen einer voreingestellten entsprechenden Beziehung zwischen Plattformkontoinformationen und Dienstfunktionen; und
Bestimmen der Mehrzahl von Dienstfunktionen, die den Plattformkontoinformationen in der Autorisierungsanfrage entsprechen, in Übereinstimmung mit der entsprechenden Beziehung.

3. Verfahren nach Anspruch 2, wobei das Bestimmen der Mehrzahl von Dienstfunktionen, die den Plattformkontoinformationen in der Autorisierungsanfrage entsprechen, in Übereinstimmung mit der entsprechenden Beziehung umfasst:
Weiterleiten der Plattformkontoinformationen in der Autorisierungsanfrage in Übereinstimmung mit einer voreingestellten Rückrufschnittstelle, um die Mehrzahl der Dienstfunktionen, die den Plattformkontoinformationen in der Autorisierungsanfrage entsprechen, in Übereinstimmung mit der entsprechenden Beziehung zu bestimmen.

4. Verfahren nach Anspruch 1, wobei das Abrufen der vorgespeicherten Geschäftsfunktion, die den Fahrzeugkontoinformationen entspricht, umfasst:
Weiterleiten der Fahrzeugkontoinformationen in der Autorisierungsanfrage in Übereinstimmung mit einer voreingestellten Rückrufschnittstelle, und Abrufen der vorgespeicherten Geschäftsfunktion, die den Fahrzeugkontoinformationen entspricht, in Übereinstimmung mit den weitergeleiteten Fahrzeugkontoinformationen.

5. Verfahren nach einem der Ansprüche 1-4, das ferner umfasst:
Empfangen einer von dem Fahrzeug gesendeten Geschäftsanfrage und Bestimmen von Rückmeldeinformationen in Übereinstimmung mit der gemäß der Geschäftsanfrage zu autorisierenden Funktion; und
Senden der Rückmeldeinformationen an das Fahrzeug;
wobei die Geschäftsanfrage vorzugsweise eine Sprachinteraktionsanfrage ist, oder die Geschäftsanfrage eine semantische Analyseanfrage ist.

6. Verfahren zum Autorisieren einer Dienstfunktion, umfassend:
Erzeugen (401) einer Autorisierungsanfrage als Reaktion auf eine Anmeldeanfrage, wobei die Anmeldeanfrage verwendet wird, um Fahrzeugkontoinformationen und Plattformkontoinformationen anzuzeigen; wobei die Autorisierungsanfrage die Fahrzeugkontoinformationen und die Plattformkontoinformationen umfasst;
Senden (402) der Autorisierungsanfrage an einen Server, wobei die Autorisierungsanfrage verwendet wird, um eine zu autorisierende Funktion zu bestimmen, die den Fahrzeugkontoinformationen entspricht, und die Autorisierungsanfrage verwendet wird, um die Fahrzeugkontoinformationen, die Plattformkontoinformationen und die zu autorisierende Funktion, die den Fahrzeugkontoinformationen entspricht, zuzuordnen; und
Empfangen (403) von Antwortinformationen, die von dem Server zurückgesendet werden, wobei die Antwortinformationen verwendet werden, um anzuzeigen, dass die Fahrzeugkontoinformationen, die Plattformkontoinformationen und die zu autorisierende Funktion, die den Fahrzeugkontoinformationen entspricht, zugeordnet worden sind;
wobei die zu autorisierende Funktion, die den Fahrzeugkontoinformationen entspricht, in Übereinstimmung mit einer Mehrzahl von Dienstfunktionen bestimmt wird, wobei die Mehrzahl von Dienstfunktionen Dienstfunktionen sind, die den Plattformkontoinformationen entsprechen; und
wobei die zu autorisierende Funktion, die den Fahrzeugkontoinformation entspricht, eine Geschäftsfunktion ist, die den Fahrzeugkontoinformationen entspricht, und die zu autorisierende Funktion, die den Fahrzeugkontoinformationen entspricht, gemäß einer vorgespeicherten Geschäftsfunktion, die den Fahrzeugkontoinformationen entspricht, bestimmt wird, wenn bestimmt wird, dass die Geschäftsfunktion in der Mehrzahl von Dienstfunktionen existiert.

7. Verfahren nach Anspruch 6, wobei die Mehrzahl von Dienstfunktionen in Übereinstimmung mit einer voreingestellten entsprechenden Beziehung zwischen Plattformkontoinformationen und Dienstfunktionen bestimmt wird.

8. Verfahren nach Anspruch 6 oder 7, das ferner umfasst:
Senden einer Geschäftsanfrage an den Server; wobei die Geschäftsanfrage verwendet wird, um Rückmeldeinformationen in Übereinstimmung mit der zu autorisierenden Funktion zu bestimmen, und
Empfangen der von dem Server gesendeten Rückmeldeinformationen;
wobei die Geschäftsanfrage vorzugsweise eine Sprachinteraktionsanfrage ist, oder die Geschäftsanfrage eine semantische Analyseanfrage ist.

9. Verfahren nach einem der Ansprüche 6 bis 8, das ferner umfasst:
wenn eine Anzahl von Malen der Anmeldeanfrage größer als eine voreingestellte Anzahl von Malen ist und eine Anmeldedauer größer als eine voreingestellte Dauer ist, Anhalten der Antwort auf die Anmeldeanfrage.

10. Einrichtung für die Autorisierung einer Dienstfunktion, umfassend:
eine erste Empfangseinheit (501), die dazu konfiguriert ist, eine von einem Fahrzeug gesendete Autorisierungsanfrage zu empfangen, wobei die Autorisierungsanfrage Fahrzeugkontoinformationen und Plattformkontoinformationen umfasst;
eine Bestimmungseinheit (502), die dazu konfiguriert ist, eine zu autorisierende Funktion zu bestimmen, die den Fahrzeugkontoinformationen entspricht;
eine Zuordnungseinheit (503), die dazu konfiguriert ist, die Fahrzeugkontoinformationen, die Plattformkontoinformationen und die zu autorisierende Funktion, die den Fahrzeugkontoinformationen entspricht, zuzuordnen; und
eine erste Sendeeinheit (504), die dazu konfiguriert ist, Antwortinformationen an das Fahrzeug zu senden, wobei die Antwortinformationen verwendet werden, um anzuzeigen, dass die Fahrzeugkontoinformationen, die Plattformkontoinformationen und die zu autorisierende Funktion, die den Fahrzeugkontoinformationen entsprechen, zugeordnet worden sind;
wobei die Bestimmungseinheit (502) umfasst:
ein erstes Bestimmungsmodul (6021), das dazu konfiguriert ist, eine Mehrzahl von Dienstfunktionen zu bestimmen, die den Plattformkontoinformationen entsprechen;
ein zweites Bestimmungsmodul (6022), das dazu konfiguriert ist, aus der Mehrzahl von Dienstfunktionen wenigstens eine Dienstfunktion als die zu autorisierende Funktion zu bestimmen, die den Fahrzeugkontoinformationen entspricht; und
wobei das zweite Bestimmungsmodul (6022) umfasst:
ein zweites Abrufteilmodul (60221), das dazu konfiguriert ist, eine vorgespeicherte Geschäftsfunktion abzurufen, die den Fahrzeugkontoinformationen entspricht; und
ein zweites Bestimmungsteilmodul (60222), das dazu konfiguriert ist, die Geschäftsfunktion als die zu autorisierende Funktion zu bestimmen, die den Fahrzeugkontoinformationen entspricht, wenn gemäß der vorgespeicherten Geschäftsfunktion, die den Fahrzeugkontoinformationen entspricht, bestimmt wird, dass die Geschäftsfunktion in der Mehrzahl von Dienstfunktionen existiert.

11. System für die Autorisierung einer Dienstfunktion, umfassend:
einen Server, der die Einrichtung nach Anspruch 10 beinhaltet; und
ein Fahrzeug mit einer Steuervorrichtung, die umfasst:
eine Erzeugungseinheit (701), die dazu konfiguriert ist, als Reaktion auf eine Anmeldeanfrage die Autorisierungsanfrage zu erzeugen, wobei die Anmeldeanfrage dazu verwendet wird, Fahrzeugkontoinformationen und Plattformkontoinformationen anzuzeigen;
eine erste Sendeeinheit (702), die dazu konfiguriert ist, die Autorisierungsanfrage an den Server zu senden; und
eine erste Empfangseinheit (703), die dazu konfiguriert ist, die Antwortinformationen zu empfangen, die von der ersten Sendeeinheit (504) des Servers zurückgesendet werden.

12. Computerprogrammprodukt, umfassend ein Computerprogramm, wobei, wenn das Computerprogramm von einem Prozessor ausgeführt wird, die Schritte des Verfahrens nach einem der Ansprüche 1 bis 5 implementiert werden, oder wenn das Computerprogramm von einem Prozessor ausgeführt wird, die Schritte des Verfahrens nach einem der Ansprüche 6 bis 9 implementiert werden.

## Revendications

1. Procédé pour autoriser une fonction de service, comprenant :
la réception (201) d'une demande d'autorisation envoyée par un véhicule, dans lequel la demande d'autorisation comprend des informations de compte de véhicule et des informations de compte de plateforme ;
la détermination (202) d'une fonction à autoriser correspondant aux informations de compte de véhicule ;
l'association (203) des informations de compte de véhicule, des informations de compte de plateforme et de la fonction à autoriser correspondant aux informations de compte de véhicule ; et
l'envoi (204) d'informations de réponse au véhicule, dans lequel les informations de réponse sont utilisées pour indiquer que les informations de compte de véhicule, les informations de compte de plateforme et la fonction à autoriser correspondant aux informations de compte de véhicule ont été associées ;
dans lequel la détermination (202) de la fonction à autoriser correspondant aux informations de compte de véhicule comprend :
la détermination (303) d'une pluralité de fonctions de service correspondant aux informations de compte de plateforme ; et
la détermination (304), parmi la pluralité de fonctions de service, d'au moins une fonction de service en tant que fonction à autoriser correspondant aux informations de compte de véhicule, comprenant :
la récupération d'une fonction commerciale préenregistrée correspondant aux informations de compte de véhicule ; et
s'il est déterminé, selon la fonction commerciale préenregistrée correspondant aux informations de compte de véhicule, que la fonction commerciale existe dans la pluralité de fonctions de service, la détermination de la fonction commerciale en tant que fonction à autoriser correspondant aux informations de compte de véhicule.

2. Procédé selon la revendication 1, dans lequel la détermination de la pluralité de fonctions de service correspondant aux informations de compte de plateforme comprend :
la récupération d'une relation correspondante prédéfinie entre les informations de compte de plateforme et les fonctions de service ; et
la détermination de la pluralité de fonctions de service correspondant aux informations de compte de plateforme dans la demande d'autorisation conformément à la relation correspondante.

3. Procédé selon la revendication 2, dans lequel la détermination de la pluralité de fonctions de service correspondant aux informations de compte de plateforme dans la demande d'autorisation conformément à la relation correspondante comprend :
la transmission des informations de compte de plateforme dans la demande d'autorisation conformément à une interface de rappel prédéfinie pour déterminer la pluralité de fonctions de service correspondant aux informations de compte de plateforme dans la demande d'autorisation conformément à la relation correspondante.

4. Procédé selon la revendication 1, dans lequel la récupération de la fonction commerciale préenregistrée correspondant aux informations de compte de véhicule comprend :
la transmission des informations de compte de véhicule dans la demande d'autorisation conformément à une interface de rappel prédéfinie, et la récupération de la fonction commerciale préenregistrée correspondant aux informations de compte de véhicule conformément aux informations de compte de véhicule transmises.

5. Procédé selon l'une quelconque des revendications 1 à 4, comprenant en outre :
la réception d'une demande commerciale envoyée par le véhicule, et la détermination d'informations de retour conformément à la fonction à autoriser selon la demande commerciale ; et
l'envoi des informations de retour au véhicule ;
préférablement, dans lequel la demande commerciale est une demande d'interaction vocale, ou la demande commerciale est une demande d'analyse sémantique.

6. Procédé pour autoriser une fonction de service, comprenant :
en réponse à une demande de connexion, la génération (401) d'une demande d'autorisation, la demande de connexion étant utilisée pour indiquer des informations de compte de véhicule et des informations de compte de plateforme ; dans lequel la demande d'autorisation comprend les informations de compte de véhicule et les informations de compte de plateforme ;
l'envoi (402) de la demande d'autorisation à un serveur ; dans lequel la demande d'autorisation est utilisée pour déterminer une fonction à autoriser correspondant aux informations de compte de véhicule, et la demande d'autorisation est utilisée pour associer les informations de compte de véhicule, les informations de compte de plateforme et la fonction à autoriser correspondant aux informations de compte de véhicule ; et
la réception (403) d'informations de réponse renvoyées par le serveur, les informations de réponse étant utilisées pour indiquer que les informations de compte de véhicule, les informations de compte de plateforme et la fonction à autoriser correspondant aux informations de compte de véhicule ont été associées ;
dans lequel la fonction à autoriser correspondant aux informations de compte de véhicule est déterminée conformément à une pluralité de fonctions de service, dans lequel la pluralité de fonctions de service sont des fonctions de service correspondant aux informations de compte de plateforme ; et
dans lequel la fonction à autoriser correspondant aux informations de compte de véhicule est une fonction commerciale correspondant aux informations de compte de véhicule, et la fonction à autoriser correspondant aux informations de compte de véhicule est déterminée selon une fonction commerciale préenregistrée correspondant aux informations de compte de véhicule lorsqu'il est déterminé que la fonction commerciale existe dans la pluralité de fonctions de service.

7. Procédé selon la revendication 6, dans lequel la pluralité de fonctions de service sont déterminées conformément à une relation de correspondance prédéfinie entre les informations de compte de plateforme et les fonctions de service.

8. Procédé selon la revendication 6 ou 7, comprenant en outre :
l'envoi d'une demande commerciale au serveur ; dans lequel la demande commerciale est utilisée pour déterminer des informations de retour conformément à la fonction à autoriser ; et
la réception des informations de retour envoyées par le serveur ;
préférablement, dans lequel la demande commerciale est une demande d'interaction vocale, ou la demande commerciale est une demande d'analyse sémantique.

9. Procédé selon l'une quelconque des revendications 6 à 8, comprenant en outre :
si un nombre de fois de la demande de connexion est supérieur à un nombre de fois prédéfini et une durée de connexion est supérieure à une durée prédéfinie, l'arrêt de la réponse à la demande de connexion.

10. Appareil pour autoriser une fonction de service, comprenant :
une première unité de réception (501), configurée pour recevoir une demande d'autorisation envoyée par un véhicule, la demande d'autorisation comprenant des informations de compte de véhicule et des informations de compte de plateforme ;
une unité de détermination (502), configurée pour déterminer une fonction à autoriser correspondant aux informations de compte de véhicule ;
une unité d'association (503), configurée pour associer les informations de compte de véhicule, les informations de compte de plateforme et la fonction à autoriser correspondant aux informations de compte de véhicule ; et
une première unité d'envoi (504), configurée pour envoyer des informations de réponse au véhicule, dans lequel les informations de réponse sont utilisées pour indiquer que les informations de compte de véhicule, les informations de compte de plateforme et la fonction à autoriser correspondant aux informations de compte de véhicule ont été associées ;
dans lequel l'unité de détermination (502) comprend :
un premier module de détermination (6021), configuré pour déterminer une pluralité de fonctions de service correspondant aux informations de compte de plateforme ;
un deuxième module de détermination (6022), configuré pour déterminer, parmi la pluralité de fonctions de service, au moins une fonction de service comme fonction à autoriser correspondant aux informations de compte de véhicule ; et
dans lequel le deuxième module de détermination (6022) comprend :
un deuxième sous-module de récupération (60221), configuré pour récupérer une fonction commerciale préenregistrée correspondant aux informations de compte de véhicule ; et
un deuxième sous-module de détermination (60222), configuré pour déterminer la fonction commerciale comme la fonction à autoriser correspondant aux informations de compte de véhicule s'il est déterminé, selon la fonction commerciale préenregistrée correspondant aux informations de compte de véhicule, que la fonction commerciale existe dans la pluralité de fonctions de service.

11. Système pour autoriser une fonction de service, comprenant :
un serveur comprenant l'appareil selon la revendication 10 ; et
un véhicule ayant un dispositif de commande comprenant :
une unité de génération (701), configurée pour, en réponse à une demande de connexion, générer la demande d'autorisation, la demande de connexion étant utilisée pour indiquer des informations de compte de véhicule et des informations de compte de plateforme ;
une première unité d'envoi (702), configurée pour envoyer la demande d'autorisation au serveur ; et
une première unité de réception (703), configurée pour recevoir les informations de réponse renvoyées par la première unité d'envoi (504) du serveur.

12. Produit programme d'ordinateur, comprenant un programme d'ordinateur, dans lequel lorsque le programme d'ordinateur est exécuté par un processeur, les étapes du procédé selon l'une quelconque des revendications 1 à 5 sont mises en oeuvre, ou lorsque le programme d'ordinateur est exécuté par un processeur, les étapes du procédé selon l'une quelconque des revendications 6 à 9 sont mises en oeuvre.
